# EUROPEAN PATENT APPLICATION

(11) **EP 2 884 573 A1**
(43) Date of publication of application: **17.06.2015**
(21) Application number: 13827904.7
(22) Date of filing: 07.08.2013
(51) Int. Cl.: H01M 10/0585, H01M 4/62, H01M 10/0562

(54) **ALL-SOLID-STATE BATTERY AND METHOD FOR MANUFACTURING SAME**

(30) Priority: 09.08.2012 JP 2012176724
(71) Applicant: Toyota Jidosha Kabushiki Kaisha, Toyota-shi, Aichi 471-8571 (JP)
(72) Inventor: SUZUKI, Yushi, Toyota-shi Aichi 471-8571 (JP); KAWAMURA, Masahiro, Toyota-shi Aichi 471-8571 (JP)
(74) Representative: TBK
(86) International application number: PCT/JP2013/071382
(87) International publication number: WO 2014/024926

(57) **Abstract**

A main object of the present invention is to provide an all-solid-state battery capable of improving the performance and a method for manufacturing the all-solid-state battery. The present invention includes: an all-solid-state battery including a first active material layer including an active material and at least one kind or more of solid material having a different young' s module from that of the active material, an electroconductive layer in contact with the first active material layer, a current collector connected to the first active material layer via the electroconductive layer, a second active material layer, a solid electrolyte layer arranged in a manner to be sandwiched by the first active material layer and the second active material layer, wherein the electroconductive layer has a larger deformation quantity when a compressive force is applied than that of the current collector; and a method for manufacturing an all-solid-state battery including the steps of preparing the first active material layer, contacting the electroconductive layer having a larger deformation quantity when a compressive force is applied than that of the current collector, connecting the current collector to the electroconductive layer such that the current collector is connected to the first active material layer via the electroconductive layer, preparing the solid electrolyte layer to be connected to the first active material layer, and preparing the second active material layer.

## Description

### BACKGROUND OF THE INVENTION

### Field of the Invention

The present invention relates to an all-solid-state battery and a method for manufacturing the all-solid-state battery.

### Description of the Related Art

A lithium-ion secondary battery has a higher energy density and is operable at a high voltage compared to conventional secondary batteries. Therefore, it is used for information devices such as cellular phones, as a secondary battery which can be easily reduced in size and weight, and nowadays there is also an increasing demand for the lithium-ion secondary battery to be used as a power source for large-scale apparatuses such as electric vehicles and hybrid vehicles.

The lithium-ion secondary battery includes a cathode layer, an anode layer, and an electrolyte layer arranged between them. An electrolyte to be used in the electrolyte layer is, for example, a non-aqueous liquid or a solid. When the liquid is used as the electrolyte (hereinafter, the liquid being referred to as "electrolytic solution"), it easily permeates into the cathode layer and the anode layer. Therefore, an interface can be formed easily between the electrolytic solution and active materials contained in the cathode layer and the anode layer, and the battery performance can be easily improved. However, since commonly used electrolytic solutions are flammable, it is necessary to have a system to ensure safety. On the other hand, if a nonflammable solid electrolyte (hereinafter referred to as "solid electrolyte") is used, the above system can be simplified. As such, development of a lithium-ion secondary battery provided with a layer including a solid electrolyte has been proceeded (hereinafter, the layer is sometimes referred to as "solid electrolyte layer", a structure having a cathode layer, an anode layer, and the solid electrolyte layer arranged between the cathode layer and the anode layer is sometimes referred to as "solid electrolyte-electrode assembly", and the battery is sometimes referred to as "all-solid-state battery").

As a technique related to such a lithium-ion secondary battery, for example Patent Document 1 discloses a method for producing a solid electrolyte-electrode assembly, the method including fabricating a stack by stacking an electrode layer on at least one side of a solid electrolyte layer which is made beforehand, and applying a pressure in a stacking direction of the stack while heating the stack. Also, Patent Document 2 discloses an electrode including a current collector including a conductive resin layer and an active material layer which is formed on the resin layer, wherein a surface of the resin layer is dissolved in a solvent to adhere to the active material layer. Patent Document 3 discloses a multilayer battery including a plate-like active material body and a current collector that are bonded via a conductive resin containing an adhesiveness giving material. Patent Document 4 discloses a technique of forming a cathode for a secondary battery, the cathode including a mix layer including a cathode active material, a binder, and an electroconductive material as essential constituents, the mix layer being carried on a current collector, wherein binding strength and electron conductivity of the mix layer are varied in a thickness direction of the mix layer, a base layer part of the mix layer to be in contact with the current collector is formed of a thin layer having a maximum bonding strength, and a surface layer part of the mix layer is formed of a thin layer having a maximum electron conductivity. Patent Document 5 discloses a cathode for a lithium secondary battery, the cathode including a cathode composite layer consisting of a binder and a cathode material which can storage/release lithium ions, a current collector, and an electroconductive adhesion layer containing at least one electroconductive material selected from a group consisting of silver, nickel, and carbon, the electroconductive layer being arranged between the cathode composite layer and the current collector.

### Citation List

### Patent Literatures

Patent Document 1: Japanese Patent Application Laid-Open No. 2011-142007
Patent Document 2: Japanese Patent Application Laid-Open No. 2010-153224
Patent Document 3: Japanese Patent Application Laid-Open No. 2004-179091
Patent Document 4: Japanese Patent Application Laid-Open No. 2000-11995
Patent Document 5: Japanese Patent Application Laid-Open No. H11-312516

### SUMMARY OF THE INVENTION

### Problems to be Solved by the Invention

The all-solid-state battery can be provided with a cathode layer and an anode layer (hereinafter the layers are sometimes referred to as "electrode layer", "first active material layer", or "second active material layer") that include a solid electrolyte together with an active material. Generally, since the young' s module of the active material and the solid electrolyte is different from each other, the degree of shape recovery after the active material and the solid electrolyte are subjected to pressure forming is different from each other. According to the technique disclosed in Patent Document 1, it is possible to increase the adhesiveness of the solid electrolyte layer and the electrode layer. Therefore, it is considered that it is possible to obtain an all-solid-state battery whose capacity and output power are improved by employing this solid electrolyte-electrode assembly. Here, if the solid electrolyte-electrode assembly is manufactured including the electrode layer including the active material and the solid electrolyte, arising from the difference between the young's module of the active material and the young's module of the solid electrolyte and the like, asperities are easily formed on the surface of the electrode layer where is to be contact with the current collector. However, in the technique disclosed in Patent Document 1, since a configuration in which the adhesiveness of the electrode layer having the surface asperity and the current collector is to be improved is not considered, there is a possibility that the effect of improving the capacity and the output power becomes inefficient. Also, in Patent Document 2 which discloses a technique related to a battery prepared with an electrolytic solution, and in Patent Documents 3 and 5, a configuration in which the electrode layer includes the solid electrolyte and a problem arising from the active material layer including substances having different young's modules are not considered. Also, in the technique disclosed in Patent Document 4, the cathode active material, the binder, and the electroconductive material are also included in the thin layer of the mix layer to be in contact with the current collector. Whereby, the problem arising from including substances having different young's modules cannot be solved with this technique. Therefore, since it is difficult to improve the adhesiveness of the electrode layer and the current collector of the all-solid-battery even by employing the techniques disclosed in Patent Documents 1 to 5, there is a possibility that the effect of improving performance of the all-solid-state battery becomes insufficient.

Accordingly, an object of the present invention is to provide an all-solid-state battery which can improve its performance and a method for manufacturing the all-solid-state battery.

### Means for Solving the Problems

As a result of an intensive study, the inventors of the present invention have found out that the all-solid-state battery in which the discharging capacity is increased and the battery resistance is reduced can be obtained by interposing an electroconductive layer between an electrode layer and a current collector. The present invention has been made based on the above finding.

In order to solve the above problems, the present invention takes following means. That is, a first aspect of the present invention is an all-solid-state battery including a first active material layer including an active material and at least one kind or more of solid material having a different young' s module from that of the active material, an electroconductive layer in contact with the first active material layer, a current collector connected to the first active material layer via the electroconductive layer, a second active material layer, and a solid electrolyte layer arranged in a manner to be sandwiched by the first active material layer and the second active material layer, wherein a deformation quantity of the electroconductive layer when a compressive pressure is applied is larger than that of the current collector.

Here, in the first aspect of the present invention and other aspects of the present invention shown below (hereinafter sometimes simply referred to as "the present invention"), as the "solid material having a different young's module from that of the active material", a solid electrolyte, an electroconductive material and the like can be exemplified.

By interposing the electroconductive layer which deforms (yields) easier than the current collector when a compressive force is applied, between the first active material layer and the current collector, it is possible to make the contact area of the first active material layer and the electroconductive layer larger than the contact area of the first active material layer and the current collector in a case where the electroconductive layer is not interposed. Such a configuration makes it possible to improve the performance of the all-solid-state battery, since the current collecting efficiency becomes easy to increase compared to a case where the electroconductive layer is not interposed, whereby it becomes possible to increase the discharging capacity and to reduce the battery resistance.

Also, in the first aspect of the present invention, a carbon material can be used for the electroconductive layer. Here, in the present invention, the configuration of the term "carbon material" is not particularly limited as long as it is a carbon material having conductivity, which can configure an electroconductive layer having a larger deformation quantity when a compressive force is applied than that of the current collector. Examples of the carbon material which can be used for the present invention include acetylene black, Ketjen black, vapor growth carbon fibers and the like. Also, the carbon material which can be used for the present invention can be formed in a powder. By using the carbon material (for example a powder carbon material and the like. The same is applied hereinafter) for the electroconductive layer, it becomes easy to improve the performance of the all-solid-state battery.

Also, in the first aspect of the present invention, it is preferable that the thickness of the electroconductive layer is 1/100 or more of the length of the active material in a thickness direction of the electroconductive layer. It can be considered that, in many cases, the modification quantity of the active material when the shape recovers after the compressive force is removed is less than 1/100 of the length of the active material in the thickness direction of the electroconductive layer. Therefore, this configuration makes it easy to increase the current collecting efficiency, whereby it becomes possible to improve the performance of the all-solid-state battery.

A second aspect of the present invention is a method for manufacturing an all-solid-state battery including: a first active material layer preparation step of preparing a first active material layer including an active material and at least one kind or more of solid material having a different young's module from that of the active material; an electroconductive layer contacting step of contacting an electroconductive layer having a larger modification quantity when a compressive force is applied than that of a current collector, to the first active material; a current collector connecting step of connecting the current collector to the electroconductive layer such that the current collector is connected to the first active material layer via the electroconductive layer; a solid electrolyte layer preparation step of preparing a solid electrolyte layer to be connected to the first active material layer; and a second active material layer preparation step of preparing a second active material layer to be arranged on the opposite side of the solid electrolyte layer from the side where the first active material layer is to be arranged.

Here, in the second aspect of the present invention, the expression of "preparing" the first active material layer, the solid electrolyte layer, and the second active material layer includes not only a form of producing these layers, but also a form of preparing layers that are already produced (e.g. purchased products and the like). By having a configuration in which the all-solid-state battery is manufactured going through the electroconductive layer contacting step and the current collector connecting step, it becomes possible to manufacture the all-solid-state battery according to the first embodiment of the present invention. Therefore, with this configuration, it is possible to manufacture the all-solid-state battery which can improve its performance.

Also, in the second aspect of the present invention, a carbon material can be used for the electroconductive layer. By using a carbon material for the electroconductive layer, it becomes easy to manufacture the all-solid-state battery whose performance is improved.

Also, in the second aspect of the present invention, it is preferable that the thickness of the electroconductive layer is 1/100 or more of the length of the active material in a thickness direction of the electroconductive layer. Since it can be considered that, in many cases, the modification quantity of the active material when the shape is recovered after the compressive force is removed is less than 1/100 of the length of the active material in the thickness direction of the electroconductive layer, it becomes easy to improve the current collecting efficiency by having this configuration. As a result, it becomes easy to manufacture the all-solid-state battery whose performance is improved.

### Effects of the Invention

According to the present invention, it is possible to provide an all-solid-state battery which can improve its performance, and a method for manufacturing the all-solid-state battery.

### BRIEF DESCRIPTION OF THE DRAWINGS

Fig. 1 is a view to explain an all-solid-state battery 10;
Fig. 2 is a conceptual diagram to explain the shape of a cathode active material and a solid electrolyte before and after a compressive force is applied;
Fig. 3A is a conceptual diagram to explain a configuration in which a first active material layer 4 and a current collector 6 are directly in contact with each other;
Fig. 3B is a conceptual diagram to explain contact interfaces of the first active material layer 4, an electroconductive layer 5, and the current collector 6 in the all-solid-state battery 10;
Fig. 4 is a flowchart to explain a method for manufacturing the all-solid-state battery 10;
Fig. 5 is a graph showing evaluation results of discharging capacity;
Fig. 6 is a graph showing evaluation results of reaction resistance.

### DETAILED DESCRIPTION OF THE INVENTION

Hereinafter, the present invention will be described with reference to the drawings. In the following drawings, some of repeated reference numerals are omitted, and to same substances, same reference numerals are given before and after modification. It should be noted that a configuration in which the electroconductive layer is interposed between the cathode layer and the cathode current collector, that is, a configuration in which the cathode layer is the first active material layer is mainly exemplified in the following explanation. However, the present invention is not limited to this configuration. The elctroconductive layer can be interposed only between the anode layer and the anode current collector. In this case, the anode layer corresponds to the first active material layer. Other than this, the electroconductive layer can be interposed between the cathode layer and the cathode current collector, and between the anode layer and the anode current collector.

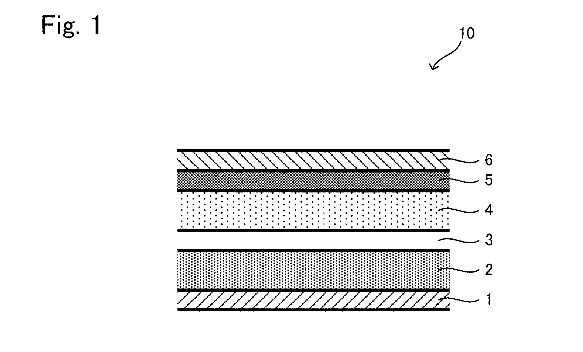

Fig. 1 is a cross-sectional view to explain the all-solid-state battery 10 of the present invention. In Fig. 1, descriptions of a housing to house the solid electrolyte-electrode assembly and the like, a terminal to be connected to the current collector and the like are omitted, and a part of the all-solid-state battery 10 is extracted to show. The all-solid-state battery shown in Fig. 1 includes an anode current collector 1, an anode layer 2 in contact with the anode current collector 1, a solid electrolyte layer 3 in contact with the anode layer 2, a cathode layer 4 in contact with the solid electrolyte layer 3, an electrocondutive layer 5 in contact with the cathode layer 4, and a cathode current collector 6 connected to the cathode layer 4 via the electroconducitve layer 5. The solid electrolyte layer 3 is arranged in a manner to be sandwiched by the anode layer 2 and the cathode layer 4, and the solid electrolyte layer 3 is in contact with the anode layer 2 and the cathode layer 4. The electroconductive layer 5 is a layer produced by going through a process in which a composite including a powder carbon material is pressed, and configured to deform to be larger than the cathode current collector 6, when a compressive force is applied in the vertical direction of the plane of paper of Fig. 1. The electroconductive layer 5 is arranged in a manner to be sandwiched by the cathode layer 4 and the cathode current collector 6, and is in contact with the cathode layer 4 and the cathode current collector 6.

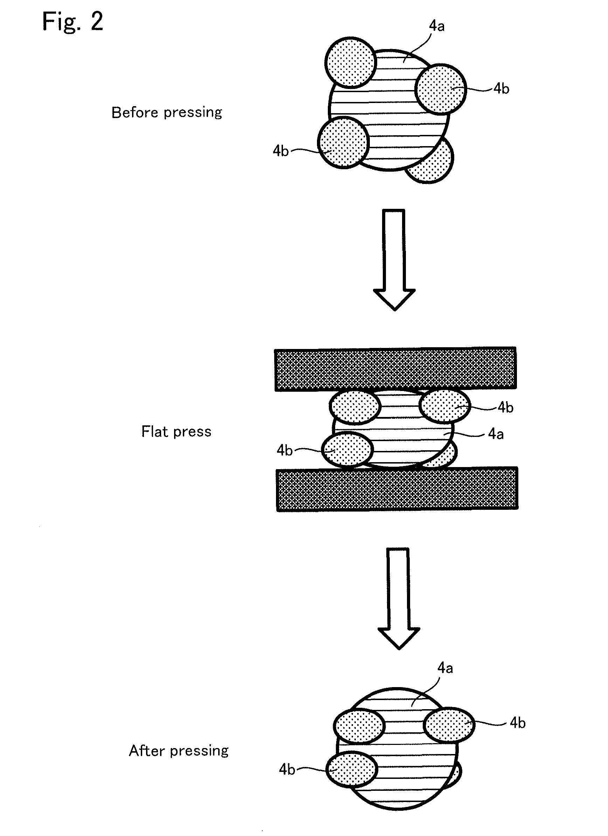

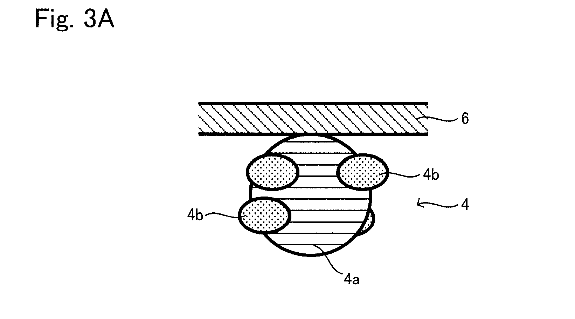

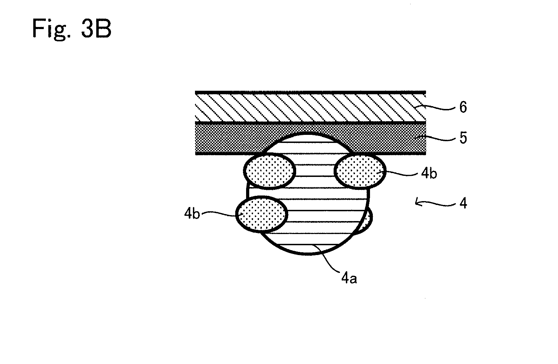

Fig. 2 is a conceptual diagram to explain the shape of the cathode active material 4a and the solid electrolyte 4b, 4b, ... from before to after the compressive force is applied (before and after pressing). Fig. 3A is a conceptual diagram to explain a configuration in which the cathode layer 4 and the cathode current collector 6 are directly in contact with each other. Fig. 3B is a conceptual diagram to show an enlarged part of the cathode layer 4, the elctroconductive layer 5, and the cathode current collector 6.

As shown in Fig. 2, the cathode layer 4 includes the cathode active material 4a, 4a, ... and the solid electrolyte 4b, 4b, ..., and their young's modules are different from each other. In a case where the cathode layer 4 is obtained by going through at least a process of producing a cathode composite including the cathode active material 4a, 4a, ... and the solid electrolyte 4b, 4b, ... and pressing them, as shown to the upper portion of the plane of paper, the cathode active material 4a, 4a, ... and the solid electrolyte 4b, 4b, ... do not receive the force by pressing. When the cathode composite in this state is pressed, the cathode composite is pushed in the vertical direction of the plane of paper, as shown in the centre portion in the vertical direction of the plane of paper of Fig. 2, and depending on the compressive force to be applied, the cathode active material 4a, 4a, ... and the solid electrolyte 4b, 4b, ... are deformed. While the compressive force is applied, the deformation state of the cathode active material 4a, 4a, ... and the solid electrolyte 4b, 4b, ... is sustained. However, when the compressive force is removed, the shape of the cathode active material 4a, 4a, ... and the solid electrolyte 4b, 4b, ... becomes easy to be recovered to have a shape close to the shape before the compressive force is applied, as shown to the lower portion of the plane of paper in Fig. 2. Since the young's module of the cathode active material 4a, 4a, ... and the solid electrolyte 4b, 4b, ... is different from each other, the deformation quantity (shape recovery quantity) after the compressive force is removed is different from each other. In the example shown in Fig. 2, the cathode active material 4a, 4a, ... has a larger shape recovery quantity than that of the solid electrolyte 4b, 4b, .... Therefore, if the pressed cathode layer 4 (the cathode layer 4 from which the compressive force is removed) and the cathode current collector 6 are made to have directly contact with each other, the contact area of the cathode layer and the cathode current collector 6 tends to be small, as shown in Fig. 3A. The all-solid-state battery including the cathode layer and the cathode current collector in this state easily reduce the discharging capacity and increase the battery resistance, whereby it is difficult to improve the performance of the battery.

Therefore, in order to inhibit such a situation in the present invention, as shown in Fig. 1 and Fig. 3B, the electroconductive layer 5 is interposed between the cathode layer 4 and the cathode current collector 6. The all-solid-state battery 10 is, for example, manufactured by going through the processes of: after producing the cathode layer 4, arranging a composite for forming electroconductive layer 5 in a manner to have contact with the cathode layer 4 and pressing it to form the electroconductive layer 5; thereafter, making the electroconductive layer 5 and the cathode current collector 6 have contact with each other. Since the electroconductive layer 5 can deform easier than the cathode current collector 6, it is possible to concave the electroconductive layer 5 along the shape of the cathode active material 4a, 4a, ... and the solid electrolyte 4b, 4b, ..., by the pressing in forming the electroconductive layer 5, by arranging the composite for forming the electroconductive layer 5 to the surface of the cathode layer 4 from which the compressive force is removed. As a result, it is possible to make the contact area of the cathode active material 4a and the electroconductive layer 5 larger than the contact area of the cathode active material 4a and the cathode current collector 6 shown in Fig. 3A. By increasing the contact area of the cathode active material 4a, 4a, ... and the electroconductive layer 5, it becomes possible to increase the discharging capacity and to reduce the battery resistance. Therefore, it is possible to provide the all-solid-state battery 10 whose performance is improved.

In the present invention, a known metal which can be used for the current collector of an all-solid-state battery can be used for the anode current collector 1 and the cathode current collector 6. Examples of the metal include metal materials including one or two or more element selected from the group consisting of Cu, Ni, Al, V, Au, Pt, Mg, Fe, Ti, Co, Cr, Zn, Ge, and In. The shape of the anode current collector 1 and the cathode current collector 6 is not particularly limited, and for example can be formed in a foil-like shape or a plate-like shape.

As the anode active material to be included in the anode layer 2, a known anode active material which can storage/release lithium ions can be adequately used. Examples of the anode active material include a carbon active material, an oxide active material, a metal active material and the like. The carbon active material is not particularly limited as long as carbon is contained thereto, and for example mesocarbon microbeads (MCMB), highly orientated graphites (HOPG), hard carbons, soft carbons and the like can be given. Examples of the oxide active material include Nb₂O₅, Li₄Ti₅O₁₂, SiO and the like. Examples of the metal active material include In, Al, Si, Sn and the like. A lithium-containing metal active material can also be used as the anode active material. The lithium-containing metal active material is not particularly limited as long as it is an active material containing at least Li, and may be a Li metal, or may be a Li alloy. Examples of the Li alloy include an alloy including Li and at least one kind selected from In, Al, Si, and Sn. The anode active material can be for example formed in a powder, a thin film and the like. The average particle diameter (D50) of the anode active material is for example preferably 1 nm or more and 100 µm or less, and more preferably 10 nm or more and 30 µm or less. The content of the anode active material in the anode layer 2 is not particularly limited, and for example preferably 40% or more and 99% or less by mass%.

Also, a known solid electrolyte which can be used for an all-solid-state battery can be adequately used for the solid electrolyte to be included in the anode layer 2. Examples of such a solid electrolyte include oxide-based amorphous solid electrolytes such as Li₂O-B₂O₃-P₂O₅ and Li₂O-SiO₂, sulfide-based amorphous solid electrolytes such as Li₂S-SiS₂, LiI-Li₂S-SiS₂, LiI-Li₂S-P₂S₅, LiI-Li₂S-P₂O₅, LiI-Li₃PO₄-P₂S₅, Li₂S-P₂S₅, and Li₃PS₄, crystalline oxides and crystalline oxynitrides such as LiI, Li₃N, Li₅La₃Ta₂O₁₂, Li₇La₃Zr₂O₁₂, Li₆BaLa₂Ta₂O₁₂, Li₃PO_{(4-3/2w)}N_{w} (w<1), Li_{3.6}Si_{0.6}P_{0.4}O₄ and the like. However, in view of having a configuration in which an electrode for a solid battery which can easily improve the performance of the solid battery can be manufactured and the like, it is preferable to use a sulfide solid electrolyte for the solid electrolyte.

Also, the anode layer 2 may contain a binder to bond the anode active material and the solid electrolyte. Examples of the binder and the electroconductive material that can be included in the anode layer 2 include acrylonitrile butadiene rubber (ABR), butadiene rubber (BR), polyvinylidene fluoride (PVdF), styrene butadiene rubber (SBR) and the like.

Further, the anode layer 2 can contain an electroconductive material which improves the electrical conductivity. Examples of the electroconductive material which can be included in the anode layer 2 include carbon materials such as vapor growth carbon fibers, acetylene black (AB), Ketjen black (KB), carbon nanotubes (CNT), and carbon nanofibers (CNF), and metal materials that can endure the environment in use of a solid battery. Also, in a case where the anode layer 2 is produced with an anode composite in a slurry form adjusted by dispersing the above anode active material and the like in a liquid, as the liquid to disperse the anode active material, heptane and the like can be exemplified, and a non-polar solvent can be preferably used. Also, the thickness of the anode layer 2 is for example preferably 0.1 µm or more and 1 mm or less, and more preferably 1 µm or more and 100 µm less. In order to make it easy to improve the performance of the all-solid-state battery 10, the anode layer 2 is preferably produced by going through the process of pressing. In the present invention, the pressure to press the anode layer 2 is preferably 200 MPa or more and more preferably approximately 400 MPa.

Also, as the solid electrolyte to be contained in the solid electrolyte layer 3, a known solid electrolyte which can be used for an all-solid-state battery can be adequately used. As the solid electrolyte, the above-mentioned solid electrolyte which can be contained in the anode layer 2 and the like can be exemplified. Other than this, the solid electrolyte layer 3 can contain a binder to bond each solid electrolyte, in view of expressing plasticity and the like. As the binder, the above-mentioned binder which can be contained in the anode layer 2 and the like can be exemplified. In view of making it possible to form the solid electrolyte layer 3 including the solid electrolyte evenly dispersed and prevented from being excessively aggregated, in order to realize high output power easily, it is preferable that the amount of the binder to be contained in the solid electrolyte layer 3 is 5 mass% or less. In a case where the solid electrolyte layer 3 is produced by going through the process of applying a solid electrolyte composite in a slurry form adjusted by dispersing the above-mentioned solid electrolyte and the like to a liquid, as the liquid to disperse the solid electrolyte and the like, heptane and the like can be exemplified, and a non-polar solvent can be preferably used. The content of the solid electrolyte material in the solid electrolyte layer 3 is for example preferably 60% or more, more preferably 70% or more, and particularly preferably 80% or more by mass%. The thickness of the solid electrolyte layer 3 is, depending on the structure of the battery, for example preferably 0.1 µm or more and 1 mm or less, and more preferably 1 µm or more and 100 µm or less.

Also, as the cathode active material 4a to be contained in the cathode layer 4, a cathode active material which can be used for an all-solid-state battery can be adequately used. Examples of such a cathode active material include layer type active materials such as lithium cobalt oxide (LiCoO₂) and lithium nickel oxide (LiNiO₂), olivine type active materials such as olivine type iron lithium phosphate (LiFePO₄), spinel type active materials such as spinel type lithium manganate and the like. The shape of the cathode active material 4a can be formed in a particle and the like for example. The average particle diameter (D50) of the cathode active material 4a is for example preferably 1 nm or more and 100 µm or less, and more preferably 10 nm or more and 30 µm or less. The content of the cathode active material 4a in the cathode layer 4 is not particularly limited, and for example preferably 40% or more and 99% or less by mass%.

Also, as the solid electrolyte 4b to be contained in the cathode layer 4, a known solid electrolyte which can be used for an all-solid-state battery can be adequately used. As the solid electrolyte, the above-mentioned solid electrolyte which can be contained in the anode layer 2 and the like can be exemplified.

In a case where a sulfide solid electrolyte is used for the solid electrolyte 4b, in view of having a configuration in which the increase in the battery resistance is easy to be prevented by making it difficult to form a high resistance layer at the interface between the cathode active material 4a and the solid electrolyte 4b, it is preferable that the cathode active material 4a is covered by an ion conductive oxide. Examples of a lithium ion conductive oxide to cover the cathode active material 4a include oxides represented by the general formula LiₓAO_{y} (A is B, C, Al, Si, P, S, Ti, Zr, Nb, Mo, Ta, or W; x and y are positive numbers). Specifically, Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, Li₂WO₄ and the like can be exemplified. Also, the lithium ion conductive oxide can be a composite oxide. As the composite oxide to cover the cathode active material 4a, an arbitral combination of the above-mentioned lithium ion conductive oxides can be employed, and for example, Li₄SiO₄-Li₃BO₃, Li₄SiO₄-Li₃PO₄ and the like can be given. In a case where the surface of the cathode active material 4a is covered by the ion conductive oxide, it is only necessary that the ion conductive oxide covers at least a part of the cathode active material 4a, and it may cover the whole surface of the cathode active material 4a. Also, the thickness of the ion conductive oxide to cover the cathode active material 4a is for example preferably 0.1 nm or more and 10 nm or less, and more preferably 1 nm or more and 20 nm or less. The thickness of the ion conductive oxide is for example can be measured by means of a transmission electron microscope (TEM).

Also, the cathode layer 4 can be produced with a known binder which can be contained in the cathode layer of an all-solid-state battery. As the binder, the above-mentioned binder which can be contained in the anode layer 2 and the like can be exemplified.

Further, the cathode layer 4 can contain an electroconductive material which improves electrical conductivity. As the electroconductive material which can be contained in the cathode layer 4, the above-mentioned electroconductive material which can be contained in the anode layer 2 and the like can be exemplified. In a case where the cathode layer 4 is produced by means of a cathode composite in a slurry form adjusted by dispersing the cathode active material 4a, the solid electrolyte 4b, the binder and the like in a liquid, as the liquid which can be used, a heptane and the like can be exemplified, and a non-polar solvent can be preferably used. The thickness of the cathode layer 4 is for example preferably 0.1 µm or more and 1 mm or less, and more preferably 1 µm or more and 100 µm or less. In order to makes it easy to improve the performance of the all-solid-state battery 10, the cathode layer 4 is preferably produced by going through a process of pressing. In the present invention, the pressure to press the cathode layer 4 can be approximately 400 MPa.

The configuration of the electroconductive layer 5 is not particularly limited as long as the electroconductive layer 5 is a layer having a larger deformation quantity (strain) when a compressive pressure is applied thereto than that of the cathode current collector 6, and having an electrical conductivity. An electroconductive material which can be used for an all-solid-state battery can be adequately used for the electroconductive material for the electroconductive layer 5. Examples of the electroconductive material include carbon materials and the like such as vapor growth carbon fibers, acetylene black (AB), Ketjen black (KB), carbon nanotubes (CNT), and carbon nanofibers (CNF). Also, the configuration of the electroconductive material to be used for the electroconductive layer 5 is not particularly limited as long as it is possible to form the electroconductive layer 5 with which the contact area of the cathode layer 4 and the electroconductive layer 5 is larger than the contact area of the cathode layer 4 and the cathode current collector 6 in a case where the electroconductive layer 5 is not used. For example, an electroconductive material in a powder (particle) form can be used. The electroconductive layer 5 can be formed by such an electroconductive material only, or can be formed by the electroconductive material and a binder. In a case where a binder is included in the electroconductive layer 5, the above-mentioned binder which can be contained in the anode layer 2 and the like can be adequately used.

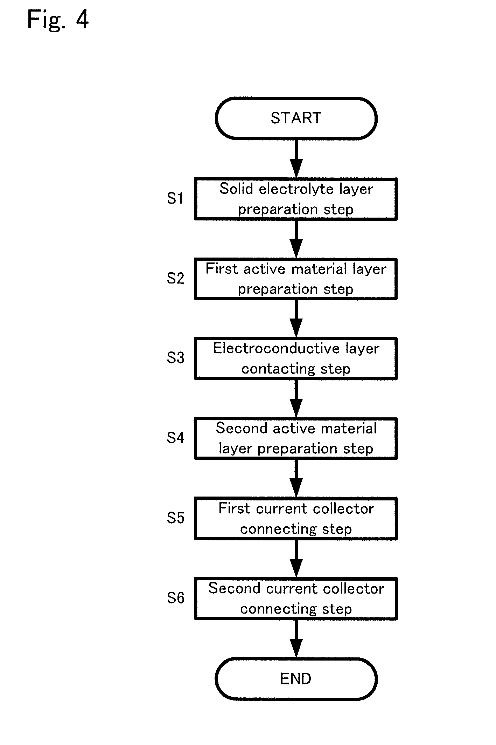

Fig. 4 is a flowchart to explain a method for manufacturing the all-solid-state battery 10 of the present invention. The method shown in Fig. 4 includes a solid electrolyte layer preparation step (S1), a first active material layer preparation step (S2), an electroconductive layer contacting step (S3), a second active material preparation step (S4), a first current collector connecting step (S5), and a second current collector connecting step (S6).

The solid electrolyte layer preparation step (hereinafter sometimes referred to as "S1") is a step of preparing the solid electrolyte layer 3. S1 may be a step of producing the solid electrolyte layer 3, or may be a step of preparing a produced solid electrolyte layer 3. S1 may be a step of producing the solid electrolyte layer 3 by pressing a powder solid electrolyte for example.

The first active material preparation step (hereinafter sometimes referred to as "S2") is a step of preparing the first active material layer (the cathode layer 4) to be connected to the first current collector (the cathode current collector 6) via the electroconductive layer 5. S2 may be a step of producing the cathode layer 4, or may be a step of preparing a produced cathode layer 4. S2 can be a step of pressing a cathode mixture including the cathode active material 4a, 4a, ..., the solid electrolyte 4b, 4b, ..., and the electroconductive material, which is arranged on the surface of the solid electrolyte layer 3 produced in S1, to thereby produce the cathode layer 4 on one surface of the solid electrolyte layer 3.

The electroconductive layer contacting step (hereinafter sometimes referred to as "S3") is a step of contacting the electroconductive layer 5 to be arranged between the first active material layer (the cathode layer 4) and the first current collector (the cathode current collector 6) to the first active material layer. The configuration of S3 is not particularly limited as long as the electroconductive layer 5 can be held in a state of being in contact with the cathode layer 4. For example S3 can be a step of pressing the electroconductive material to configure the electroconductive layer 5 arranged on the surface (the opposite surface from the side where is in contact with the solid electrolyte layer 3) of the cathode layer 4 which is produced on the surface of the solid electrolyte layer 3, to thereby produce the electroconductive layer 5 on the surface of the cathode layer 4.

The second active material layer preparation step (hereinafter sometimes referred to as "S4") is a step of preparing the second active material layer (the anode layer 2) to be arranged in a manner to sandwich the solid electrolyte layer 3, with the first active material layer (the cathode layer 4). S4 may be a step of producing the anode layer 2, or may be a step of preparing a produced anode layer 2. S4 can be, for example, a step of pressing an anode mixture (a mixture including the anode active material, the solid electrolyte, and the electroconductive material) to configure the anode layer 2 in a state of being arranged on the surface of the solid electrolyte layer 3 where is not in contact with the cathode layer 4, to thereby produce the anode layer 2 on one surface of the solid electrolyte layer 3.

The first current collector connecting step (hereinafter sometimes referred to as "S5") is a step of connecting the first current collector (the cathode current collector 6) to the electroconductive layer 5. The configuration of S5 is not particularly limited as long as the cathode current collector 6 can be connected to the electroconductive layer 5, and a known method can be used to connect the cathode current collector 6 to the electroconductive layer 5.

The second current collector connecting step (hereinafter sometimes referred to as "S6") is a step of connecting the second current collector (the anode current collector 1) to the anode layer 2. The configuration of S6 is not particularly limited as long as the anode current collector 1 can be connected to the anode layer 2, and a known method can be used to connect the anode current collector 1 to the anode layer 2.

For example, by going through S1 to S6, the all-solid-state battery 10 can be manufactured. As described above, according to the all-solid-state battery 10 in which the contact area of the cathode active material 4a, 4a, ... and the electroconductive layer 5 is increased, it is possible to improve the performance by increasing the discharging capacity and reducing the battery resistance. Therefore, according to the present invention, it is possible to provide a method for manufacturing an all-solid-state battery, with which an all-solid-battery whose performance is improved can be manufactured.

In the present invention, the thickness of the electroconductive layer to be arranged between the active material layer and the current collector, more specifically, the thickness of the electroconductive layer to be arranged (1) between the cathode layer and the cathode current collector, (2) between the anode layer and the anode current collector, or (3) both between the cathode layer and the cathode current collector and between the anode layer and the anode current collector, is not particularly limited. However, in view of making it easy to improve the performance of the all-solid-state battery by having a configuration in which the effect from increasing the contact area of the active material layer and the current collector, it is preferable that the thickness of the electroconductive layer is 1/100 or more of the length of the active material (the active material included in the active material layer connected to the current collector via the electroconductive layer) in a thickness direction of the electroconductive layer.

Also, in view of having a configuration in which the conductive resistance of lithium ions and electrons is easily reduced and the like, it is preferable that the all-solid-state battery of the present invention is used in a state that the force to compress each layer configuring the all-solid-state battery in a thickness direction (vertical direction of the plane of paper of Fig. 1) is applied. In the present invention, the size of the pressure to be applied in using the all-solid-state battery is not particularly limited, and in view of having a configuration in which the effect of the present invention is easy to be obtained and the like, it is preferable that the pressure (restraining pressure) to be applied in use of the all-solid-state battery is 2.45 MPa or less.

In the above explanation according to the present invention, a configuration in which the all-solid-state battery is a lithium ion secondary battery is exemplified. However, the present invention is not limited to this configuration. The all-solid-state battery of the present invention and the all-solid-state battery manufactured by the manufacturing method of the present invention can have a configuration in which ions other than lithium ions transfer between the cathode layer and the anode layer. Examples of such ions include sodium ions, potassium ions and the like. In a case where ions other than lithium ions transfer, the cathode active material, the solid electrolyte, and the anode active material can be adequately chosen depending on the ions to transfer.

### Examples

### 1. Production of all-solid-state battery

### [Synthesis of solid electrolyte]

In a glovebox having an argon atmosphere, 0.7656 g of Li₂S (manufactured by Nippon Chemical Industrial CO., LTD) and 1.2344 g of P₂S₅ (manufactured by Aldrich) were weighed, put in an agate mortar, and mixed for 5 minutes; thereafter, 4 g of heptane was added in the agate mortar and mixed, whereby a raw material composition was obtained. Next, the obtained raw material composition was put in a zirconia pot, and zirconia balls were further put in the pot, then the pot was sealed having an argon atmosphere; thereafter the pot was attached to a planetary ball mills (manufactured by FRITSCH, P-7) and subjected to a mechanical milling for 40 hours, whereby a solid electrolyte (sulfide solid electrolyte) was synthesized.

### [Cathode mixture]

A cathode active material (LiNi_{1/3}Co_{1/3}Mn_{1/3}O₂, manufactured by NICHIA CORPORATION) in an amount of 12.03 mg, 0.51 mg of vapor growth carbon fiber (manufactured by SHOWA DENKI K. K.), and 5.03 mg of the synthesized solid electrolyte were weighed and mixed, whereby a cathode mixture was obtained.

### [Anode mixture]

An anode active material (graphite, manufactured by Mitsubishi Chemical Corporation) in an amount of 9.06 mg, and 8.24 mg of the synthesized solid electrolyte were weighed and mixed, whereby an anode mixture was obtained.

### [Production of all-solid-state battery]

In a glovebox having an argon atmosphere, 18 mg of the synthesized solid electrolyte was put in a mold having a size of 1 cm² and pressed at a pressure of 98 MPa, whereby a solid electrolyte layer was produced. Next, 17.57 mg of the cathode mixture was put on one side of the solid electrolyte layer and pressed at a pressure of 98 MPa, whereby a cathode layer was produced on one side of the solid electrolyte layer. Next, 6 mg of acetylene black (manufactured by DENKI KAGAKU KOGYO KABUSHIKI KAISHA) was put on a surface of the produced cathode layer and pressed at a pressure of 98 MPa, whereby an electroconducitve layer was produced on the surface of the cathode layer. Thereafter, 17.3 mg of the anode mixture was put on the surface of the solid electrolyte layer where the cathode layer is not formed, and pressed at a pressure of 392 MPa, whereby an anode layer was produced. After that, by going through the process of connecting a cathode current collector (SUS304) to the electroconductive layer and connecting an anode current collector (SUS304) to the anode layer, an all-solid-state battery of Example was produced. On the other hand, an all-solid-state battery of Comparative Example was produced in the same manner as the all-solid-state battery of Example, except that the electroconductive layer was not produced.

### 2. Battery evaluation

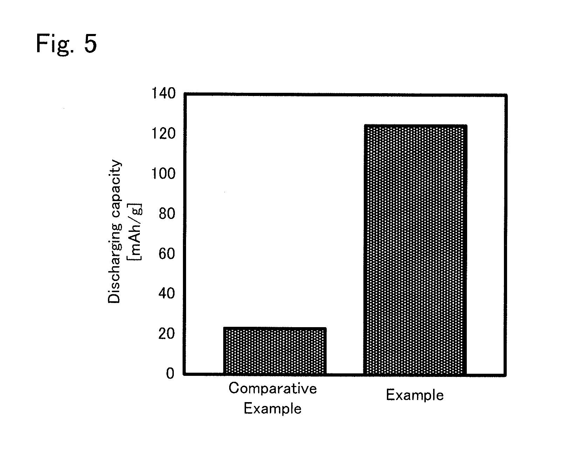

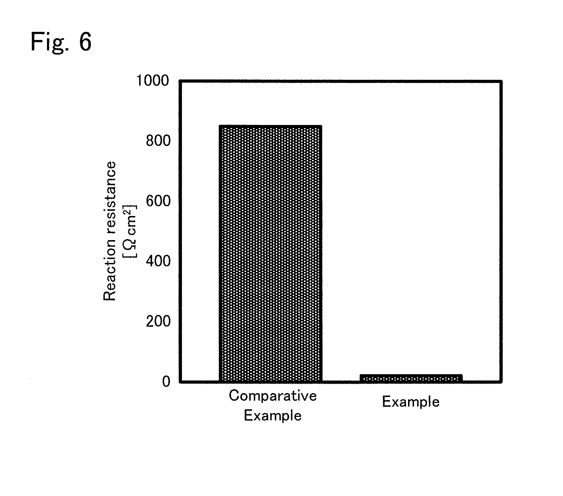

Each of the all-solid-state battery of Example and the all-solid-state battery of Comparative Example was charged at a constant current at 0.3 mA to 4.3V, then discharged at 0.3 mA to 3.0V, whereby the discharging capacity was measured. The results were shown in Fig. 5. The discharging capacity [mAh/g] is taken along the vertical axis in Fig. 5. After the discharging capacity was measured, each of the all-solid-state batteries of Example and Comparative Example was charged to 3. 6V to adjust the voltage, and the battery resistance (reaction resistance) was measured by means of an impedance measurement apparatus (manufactured by Solartron Metrology). The results are shown in Fig. 6. The reaction resistance [Ωcm²] is taken along the vertical axis of Fig. 6.

### 3. Results

As shown in Fig. 5, the discharging capacity of the all-solid-state battery of Example in which the electroconductive layer was interposed between the cathode layer and the cathode current collector was approximately 5 times larger than the discharging capacity of the all-solid-state battery of Comparative Example in which the electroconductive layer was not used. Also, as shown in Fig. 6, the reaction resistance of the all-solid-state battery of Example was less than 1/10 of the reaction resistance of the all-solid-state battery of Comparative Example. As described above, according to the present invention in which the electrode layer and the current collector are connected via the electroconductive layer, it was possible to improve the performance of the all-solid-state battery.

### Description of the Reference Numerals

- 1: anode current collector
- 2: anode layer (second active material layer)
- 3: solid electrolyte layer
- 4: cathode layer (first active material layer)
- 4a: cathode active material
- 4b: solid electrolyte
- 5: electroconductive layer
- 6: cathode current collector (current collector)
- 10: all-solid-state battery

## Claims

1. An all-solid-state battery comprising:
a first active material layer comprising an active material and at least one kind or more of solid material which has a different young's module from that of the active material;
an electroconductive layer in contact with the first active material layer;
a current collector connected to the first active material layer via the electroconductive layer;
a second active material layer; and
a solid electrolyte layer arranged in a manner to be sandwiched by the first active material layer and the second active material layer,
wherein a deformation quantity of the electroconductive layer when a compressive pressure is applied is larger than that of the current collector.

2. The all-solid-state battery according to claim 1, wherein a carbon material is included in the elctroconductive layer.

3. The all-solid-state battery according to claim 1 or 2, wherein a thickness of the electroconductive layer is 1/100 or more of a length of the active material in a thickness direction of the electroconductive layer.

4. A method for manufacturing an all-solid-state battery, the method comprising:
a first active material layer preparation step of preparing a first active material layer including an active material and at least one kind or more of solid material which has a different young's module from that of the active material;
an electroconductive layer contacting step of contacting an electroconductive layer having a larger deformation quantity when a compressive force is applied than that of a current collector, to the prepared first active material layer;
a current collector connecting step of connecting the current collector to the electroconductive layer such that the current collector is connected to the first active material layer via the electroconductive layer;
a solid electrolyte layer preparation step of preparing a solid electrolyte layer to be connected to the first active material layer; and
a second active material layer preparation step of preparing a second active material layer to be arranged to opposite side of the solid electrolyte layer from the side where the first active material layer is to be arranged.

5. The method for manufacturing an all-solid-state battery according to claim 4, wherein the electroconductive layer includes a carbon material.

6. The method for manufacturing an all-solid-state battery according to claim 4 or 5, wherein the thickness of the electroconductive layer is 1/100 or more of a length of the active material in a thickness direction of the electroconductive layer.
